# EUROPÄISCHE PATENTSCHRIFT

(11) **EP 1 681 275 B1**
(45) Veröffentlichungstag und Bekanntmachung des Hinweises auf die Patenterteilung: **27.06.2012**
(21) Anmeldenummer: 05024617.2
(22) Anmeldetag: 11.11.2005
(51) Int. Cl.: C03B 9/193, C03B 9/36, C03B 9/16, C03B 9/18

(54) **Plungermechanismus für eine Glasmaschine**
Plunger mechanism of a glass machine
Mécanisme de poinçon-ébaucheur d'une machine de moulage de verre

(30) Priorität: 07.01.2005 DE 102005001065
(43) Veröffentlichungstag der Anmeldung: 19.07.2006
(73) Patentinhaber: GPS GLASPRODUKTIONS-SERVICE GMBH, 45329 Essen (DE)
(72) Erfinder: Emrath, Norbert, 45721 Haltern (DE); Krämer, Kurt, 45329 Essen (DE)
(74) Vertreter: Lelgemann, Karl-Heinz

(56) Entgegenhaltungen:
- EP-A- 0 438 865
- EP-A- 1 466 871
- DE-U1-202004 003 097
- GB-A- 415 634
- GB-A- 1 288 477
- US-A- 3 024 571
- US-A- 5 358 543
- US-A- 5 411 564

## Beschreibung

Die Erfindung bezieht sich auf einen Plungermechanismus für eine Vor- bzw. Fertigform einer Glasmaschine nach dem Oberbegriff des Patentanspruchs 1.

Im Betrieb der Vor- bzw. Fertigform wird die Bewegung des Plungers bzw. Pegels in dessen oberen Totpunkt dadurch abgebremst, dass der Plunger bzw. Pegel mit seinem oberen Ende in Anlage an im oberen Bereich der Vor- bzw. Fertigform vorhandenes Glasmaterial gerät. Bei seinem Abwärtshub schlägt üblicherweise die Plungerstange mit ihrem unteren Ende bzw. dem dort sitzenden Kolben gegen den unteren Bereich des Zylinders an, was zu erheblichen Materialbeanspruchungen und daraus resultierenden Beschädigungen führt.

Aus der GB-A-415 634 ist ein Plungermechanismus für eine Vorform einer Glasmaschine bekannt, zu dem ein Plunger bzw. Pegel gehört, der mittels eines in einem Zylinder auf- und abwärts beweglichen druckfluidbeaufschlagten Kolbens zwischen seinem oberen und seinem unteren Totpunkt bewegbar ist. Die Bewegung des Kolbens in dessen unteren Totpunkt wird mittels einer Federungseinrichtung verlangsamt bzw. abgefedert. Zu dieser Federungseinrichtung gehören in der Zylinderwandung ausgebildete Bohrungen, die in Hubrichtung des Kolbens zueinander beabstandet sind und beim Abwärtshub des Kolbens nacheinander geschlossen werden. Aufgrund der hierdurch stattfindenden Reduzierung des für die Abströmung der unterhalb der Unterfläche des Kolbens vorhandenen Luft zur Verfügung stehenden Strömungsquerschnitts ergibt sich eine Verlangsamung der Abwärtsbewegung des Kolbens. Die zuletzt geschlossene Bohrung ist exakt im Bereich des unteren Totpunkts des Kolbenhubs angeordnet, in dem zugleich auch der Boden des durch den Zylinder definierten Innenraums vorliegt.

Aus der US-A-3,024,571 ist ein Plungermechanismus bekannt, bei dem ebenfalls eine in einer Zylinderwandung vorgesehene, unter anderem dem Luftabfluss bei der Bewegung des Kolbens in dessen unteren Totpunkt dienende Bohrung exakt in dem Augenblick geschlossen wird, wenn der Kolben seinen unteren Totpunkt erreicht, wobei dieser Kolben dann gegen eine Radialstufe inner-halb des Zylinders in Anlage gerät.

Aus der EP-A2-1 568 663 ist eine Vorformstation einer Press-Blas-Glasformmaschine bekannt, bei der eine Federungseinrichtung vorhanden ist, die dazu dient, eine Zentriervorrichtung, mittels der Achsabweichungen zwischen dem Plungermechanismus und der Vorform ausgeglichen werden können, aus einer Ruheposition in eine Betriebsposition verstellbar ist. Mit der Bewegung des Plungermechanismus in Richtung auf die Betriebsstellung des Plungers bzw. Pegels wird diese Zentriervorrichtung in Hubrichtung des Plungermechanismus versetzt und in Eingriff mit der Vorform gebracht. Da die Plungerachse in Bezug auf die Achse des Antriebsmechanismus des Plungers radial versetzbar ist und mit einer Versetzung der Zentriervorrichtung zersetzt wird, kann eine optimale Positionierung des Plungers als solchem in Bezug auf die Vorform erreicht werden, ohne dass die Achse des eigentlichen Antriebsmechanismus des Plungers versetzt werden müsste. Die Federeinrichtung dient bei dem aus der EP-A2-1 568 663 bekannten Plungermechanismus zur Bewegung dieser Zentriervorrichtung.

Ausgehend von dem eingangs geschilderten Stand der Technik liegt der Erfindung die Aufgabe zugrunde, einen Plungermechanismus zu schaffen, bei dem der aufgrund der Bewegung des Pegels bzw. Plungers in den unteren Totpunkt auftretende Verschleiß erheblich reduziert ist.

Diese Aufgabe wird erfindungsgemäß durch die Merkmale im kennzeichnenden Teil des Patentanspruchs 1 gelöst

Die Federungseinrichtung weist eine in einer Wandung des den Kolben beweglich aufnehmenden Zylinders ausgebildete Bohrung auf, durch die hindurch Abluft bei der Bewegung des Kolbens in Richtung auf den unteren Totpunkt des Plungers bzw. Pegels entweichen kann. Die Bohrung ist im dem unteren Totpunkt des Plungers bzw. Pegels zugeordneten unteren Endabschnitt des Zylinders ausgebildet, so dass die Abwärtsbewegung des Plungers bzw. Pegels bis unmittelbar vor den unteren Totpunkt desselben mit derselben Geschwindigkeit stattfinden kann wie bei herkömmlichen Vor- bzw. Fertigformen.

Die Bohrung ist so ausgebildet und angeordnet, dass sie bei der Bewegung des Plungers bzw. Pegels in den unteren Totpunkt in der Bewegungsphase unmittelbar vor Erreichen desselben durch den Kolben schließbar ist; es bildet sich unterhalb der Unterfläche des Kolbens ein Luftpolster, mittels dem verhindert wird, dass der Kolben mit seiner Unterseite gegen den unteren Bereich des Zylinders bzw. dessen Boden und dort vorhandene Bauteile anschlagen kann. Dadurch, daß der Öffnungsquerschnitt der Bohrung allmählich durch die Mantelfläche des Kolbens geschlossen wird, ergibt sich eine allmählich ansteigende Polster- bzw. Federwirkung, da der für den Abfluß der unterhalb der Unterseite des Kolbens befindlichen Luft zur Verfügung stehende Strömungsquerschnitt nach und nach abnimmt.

Vorteilhaft lässt sich das Entweichen der unterhalb der Unterseite des Kolbens im Innenraum des Zylinders befindlichen Luft verhindern, wenn in einem Luftkanal, durch den hindurch bei der Bewegung des Kolbens in Richtung auf den oberen Totpunkt des Plungers bzw. Pegels Druckluft zur Unterfläche des Kolbens geleitet wird, ein Rückschlagventil angeordnet ist, das die Druckluftzufuhr zur Unterfläche des Kolbens zulässt und den Luftkanal in der entgegengesetzten Richtung sperrt. Durch diesen, der Druckluftbeaufschlagung der Unterseite des Kolbens dienenden Luftkanal kann somit die unterhalb der Unterseite des Kolbens vorhandene Luft nicht entweichen, wenn sich der Kolben bei der Bewegung des Pegels bzw. Plungers in dessen unteren Totpunkt abwärts bewegt.

Vorteilhaft schließt die Bohrung den Innenraum des Zylinders an einen Abluftkanal an, der in der Wandung des Zylinders ausgebildet ist, und durch den hindurch Druckluft zur Beaufschlagung der Oberseite des Kolbens beim Abwärtshub desselben einleitbar ist und durch den hindurch die über die Oberseite des Kolbens befindliche Luft beim Aufwärtshub desselben entweichen kann.

Im folgenden wird die Erfindung anhand einer Ausführungsform unter Bezugnahme auf die Zeichnungen näher erläutert.

Es zeigen:
- Figur 1: eine erste Schnittdarstellung durch eine Antriebseinrichtung eines Plungers bzw. Pegels einer erfindungsgemäßen Vor- oder Fertigform einer Glasmaschine;
- Figur 2: eine zweite Schnittdarstellung der in Figur 1 gezeigten Antriebseinrichtung; und
- Figur 3: eine dritte Schnittdarstellung der Antriebseinrichtung.

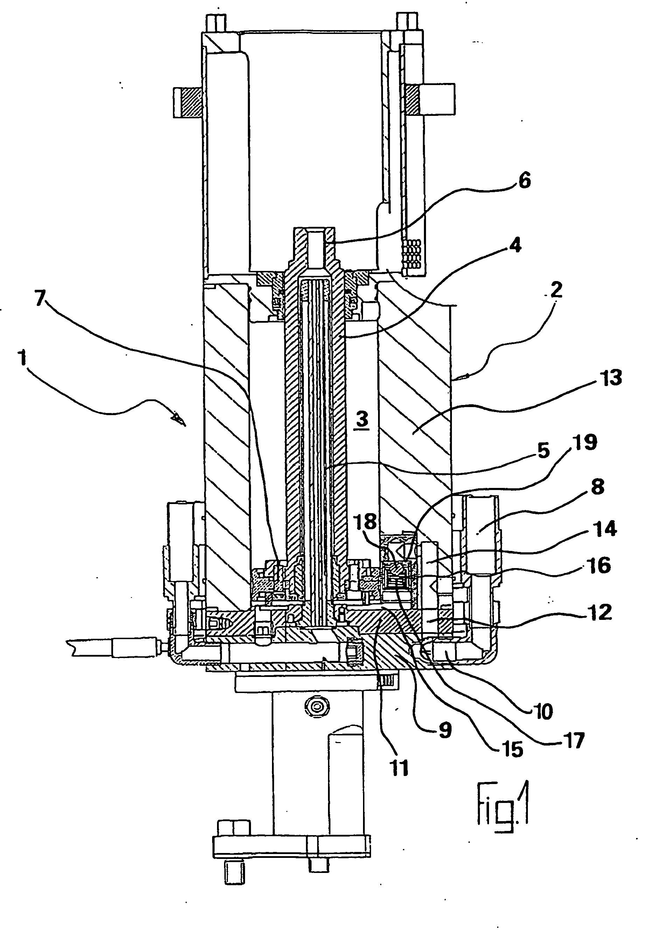

Die Figuren 1 bis 3 zeigen in unterschiedlichen Schnittdarstellungen eine Ausführungsform einer Antriebseinrichtung 1 eines in den Figuren nicht dargestellten Plungers bzw. Pegels einer Vor- oder Fertigform einer Glasmaschine.

Die Antriebseinrichtung 1 hat einen Zylinder 2 mit einem Innenraum 3. Innerhalb des Innenraums 3 des Zylinders 2 ist koaxial eine hohlzylindrische Plungerstange 4 in Axialrichtung beweglich auf einem Kühlrohr 5 angeordnet. Die Plungerstange 4 steht mit ihrem oberen Endabschnitt 6 aus dem Innenraum des Zylinders 2 in aufwärtiger Richtung vor. Mit diesem oberen Endabschnitt 6 der Plungerstange 4 ist der Plunger bzw. Pegel der Vor- oder Fertigform der Glasmaschine fest verbunden.

Zur Aufwärts- und Abwärtsbewegung der Plungerstange 4 längs des Kühlrohrs 5 ist die Plungerstange 4 an ihrem unteren Ende mit einem Kolben 7 versehen. Der Außendurchmesser des Kolbens 7 entspricht im wesentlichen dem Innendurchmesser des Innenraums 3 des Zylinders 2.

Zur Aufwärtsbewegung des Kolbens 7 und damit der Plungerstange 4 und des in den Figuren nicht gezeigten Pegels bzw. Plungers wird die Unterseite des Kolbens 7 mit Druckluft beaufschlagt. Die Zufuhr der Druckluft erfolgt durch einen Luftkanal, der durch einen Anschluß 8, einen in einem Sattel 9 ausgebildeten Kanalabschnitt 10 einem in einer Bodenplatte 11 ausgebildeten Kanalabschnitt 12 und einen in einer Wandung 13 des Zylinders 2 ausgebildeten Kanalabschnitt 14, in dem stromauf eines Einlasses 15 in den Innenraum 3 ein Rückschlagventil 16 angeordnet ist. Der Einlaß 15 ist so in der Wandung 13 des Zylinders 2 angeordnet und ausgebildet, dass er stets unterhalb der Unterfläche des Kolbens 7 sich befindet.

Das Rückschlagventil 16 hat eine Ventilfeder 17 und eine Ventilkugel 18, die mittels der Ventilfeder 17 so gegen einen Kugelsitz 19 vorgespannt ist, dass eine Druckluftbeaufschlagung des unterhalb der Unterseite des Kolbens 7 befindlichen Bereichs des Innenraums 3 des Zylinders 2 möglich ist, dass jedoch das Ausströmen von Luft aus dem unterhalb der Unterseite des Kolbens 7 angeordneten Bereich des Innenraums 3 des Zylinders 2 bei einer Abwärtsbewegung des Kolbens 7 nicht möglich ist, da dann die Ventilkugel 18 mittels der Ventilfeder 17 in dichte Anlage an den Kugelsitz 19 gedrückt wird.

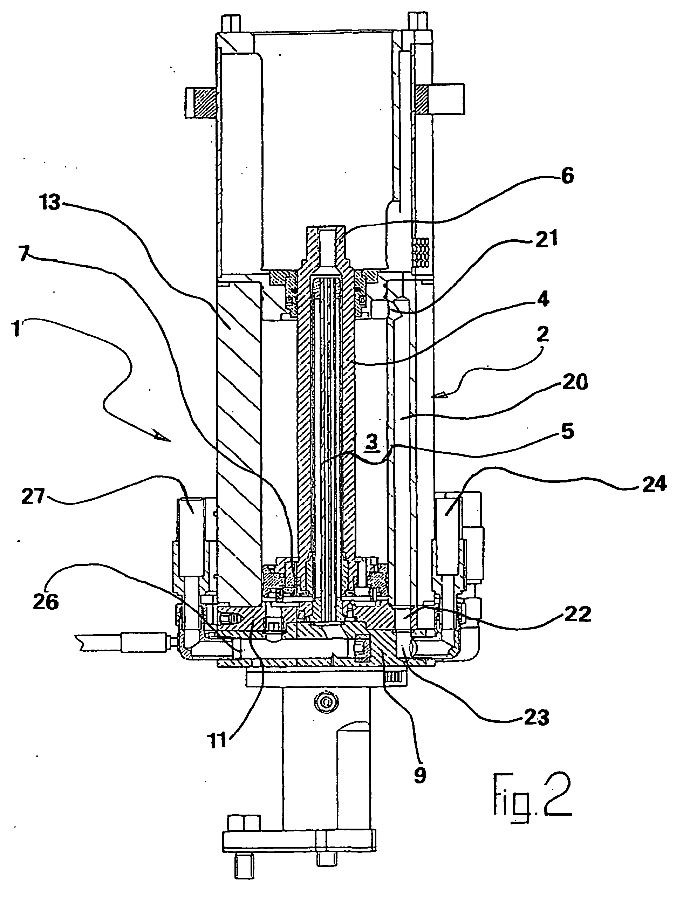

Wie insbesondere aus Figur 2 hervorgeht, ist in der Wandung 13 des Zylinders 2 ein Abluftkanal 20 ausgebildet, der sich von einer Öffnung 21 im oberen Bereich des Zylinders 2 bis zu einem in der Bodenplatte 11 ausgebildeten Kanalabschnitt 22 erstreckt. Der in der Bodenplatte 11 ausgebildete Kanalabschnitt 22 geht in einen im Sattel 9 ausgebildeten Kanalabschnitt 23 über, der seinerseits an einen Anschluß 24 angeschlossen ist.

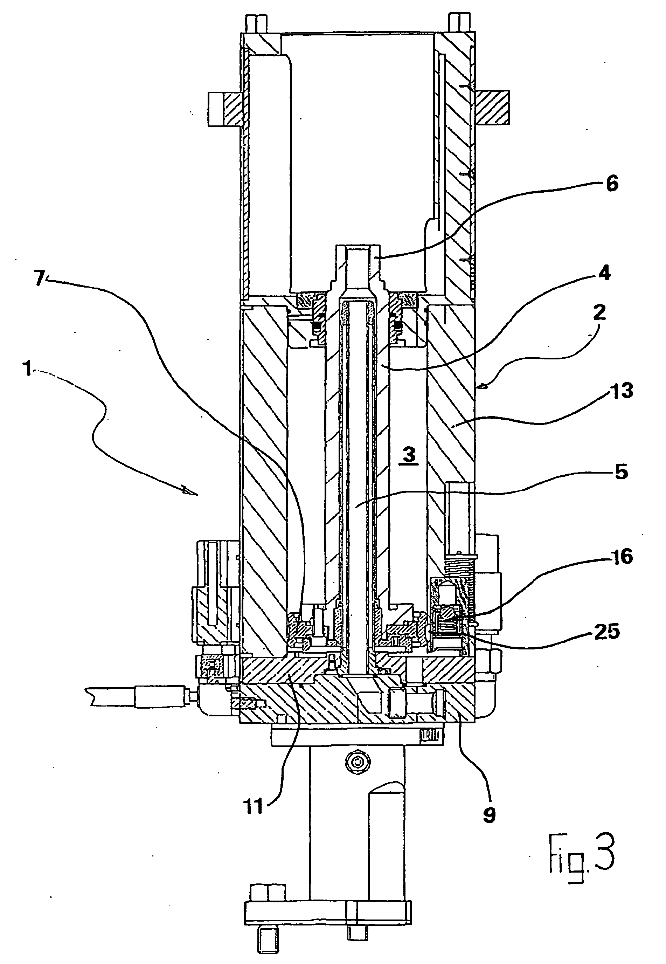

Wie am besten aus Figur 3 hervorgeht, ist im unteren Bereich des Zylinders 2 bzw. des Innenraums 3 die Wandung 13 des Zylinders durch eine Bohrung 25 durchbrochen, mittels der der Innenraum des Zylinders im dargestellten Ausführungsbeispiel an den in der Wandung 13 des Zylinders 2 ausgebildeten Abluftkanal 20 angeschlossen ist. Durch diese Bohrung 25 kann unterhalb der Unterseite des Kolbens 7 vorhandene Luft aus dem unterhalb der Unterseite des Kolbens 7 angeordneten Innenraum 3 des Zylinders 2 entweichen.

Der Abluftkanal 20 mit der Öffnung 21 und den Kanalabschnitten 22, 23 sowie dem Anschluß 24 dient dazu, bei der Auf- und Abwärtsbewegung der Plungerstange 4 bzw. des Kolbens 7 Luft aus dem oberhalb der Oberseite des Kolbens 7 angeordneten Bereich des Innenraums 3 des Zylinders abzulassen bzw. dorthin einzulassen.

Beim Abwärtshub der Plungerstange 4 in Richtung auf deren unteren Totpunkt gelangt der Kolben 7 in den unteren Endabschnitt des Innenraums 3 des Zylinders 2. Bei der Bewegung in den unteren Bereich des Innenraums 3 kann zunächst die unterhalb der Unterseite des Kolbens 7 vorhandene Luft durch die Bohrung 25 und den Abluftkanal 20 sowie die Kanalabschnitte 22, 23 und den Anschluß 24 aus dem Innenraum 3 entweichen. Nähert sich jedoch der Kolben 7 seinem unteren Totpunkt, wird die Bohrung 25, durch die hindurch der Abluftkanal 20 an den Innenraum 3 des Zylinders 2 angeschlossen ist, durch die Außenwandung des Kolbens 7 geschlossen, wobei der Querschnitt der Bohrung 25 allmählich durch die Außenwandung des Kolbens 7 abgedeckt und damit die Bohrung 25 abgesperrt wird. Unterhalb der Unterseite des Kolbens 7 verbleibt somit eine bestimmte Luftquantität, die nicht aus dem Innenraum entweichen kann und die somit ein Polster bzw. eine Federung für den Kolben 7 und damit die mit diesem fest verbundene Plungerstange 4 etc. bildet. Hierdurch können Beanspruchungen des Kolbens 7, der Plungerstange 4 etc. erheblich reduziert werden. Diese Luftpolsterung bzw. Luftfederung führt zu einer erheblichen Erhöhung der Lebensdauer der entsprechenden Bauteile.

Das Kühlrohr 5 ist über eine Kanalverbindung 26 mit einer Pegelkühlung 27 verbunden.

## Patentansprüche

1. Plungermechanismus für eine Vor- bzw. Fertigform einer Glasmaschine, mit einem Plunger bzw. Pegel, der mittels eines in einem Zylinder (2) auf- und abwärts beweglichen, druckluftbeaufschlagten Kolbens (7) zwischen seinem oberen und seinem unteren Totpunkt bewegbar ist, mit einer Federungseinrichtung (25), mittels der die Abwärtsbewegung des Plungers bzw. Pegels vor Erreichen des unteren Totpunkts desselben verlangsam- bzw. abfederbar ist, und zu der eine in einer Wandung (13) des den Kolben (7) beweglich aufnehmenden Zylinders (2) ausgebildete Bohrung (25) gehört, durch die hindurch Abluft bei der Bewegung des Kolbens (7) in Richtung auf den unteren Totpunkt des Plungers bzw. Pegels aus dem Innenraum (3) des Zylinders (2) entweichen kann, **dadurch gekennzeichnet, dass** die Bohrung (25) in dem dem unteren Totpunkt des Plungers bzw. Pegels zugeordneten unteren Endabschnitt des Zylinders (2) ausgebildet ist und bei der Bewegung des Plungers bzw. Pegels in den unteren Totpunkt in der Bewegungsphase unmittelbar vor Erreichen desselben durch den Kolben (7) schließbar ist, so dass sich unterhalb der Unterfläche des Kolbens (7) ein Luftpolster bildet, mittels dem verhinderbar ist, dass der Kolben (7) mit seiner Unterseite gegen den unteren Bereich des Zylinders (2) bzw. dessen Boden und dort vorhandene Bauteile anschlagen kann.

2. Plungermechanismus nach Anspruch 1, bei dem in einem Luftkanal (8, 10, 12, 14), durch den hindurch bei der Bewegung des Kolbens (7) in Richtung auf den oberen Totpunkt des Plungers bzw. Pegels Druckluft zur Unterfläche des Kolbens (7) geleitet wird, ein Rückschlagventil (16) angeordnet ist, das die Druckluftzufuhr zur Unterfläche des Kolbens (7) zulässt und den Luftkanal (8, 10, 12, 14) in der entgegengesetzten Richtung sperrt.

3. Plungermechanismus nach einem der Ansprüche 1 oder 2, bei der die Bohrung (25) den Innenraum (3) des Zylinders (2) an einen Abluftkanal (20) anschließt, der in der Wandung (13) des Zylinders (2) ausgebildet ist und durch den hindurch Druckluft bzw. Luft zur und von der Oberseite des Kolbens (7) hin- bzw. ableitbar ist.

## Claims

1. A plunger mechanism for a blank mold or finish mold of a glass machine, with a plunger or ram which can be moved between its upper and lower dead point by means of a piston (7) which is pressurized by compressed air and can move up and down in a cylinder (2), with a cushioning device (25) by means of which the downward movement of the plunger or ram can be slowed down or cushioned before the lower dead point of the latter is reached, and which comprises a bore (25) which is formed in a wall (13) of the cylinder (2) which receives the piston (7) in a movable manner, wherein through said bore, the exhaust air can escape from the interior (3) of the cylinder (2) during the movement of the piston (7) toward the lower dead point of the plunger or ram, **characterized in that** the bore (25) is formed in the cylinder's (2) lower end section assigned to the lower dead point of the plunger or ram and, during the movement of the plunger or ram to the lower dead point, in the moving phase immediately before reaching the dead point, can be closed by the piston (7) so that below the bottom face of the piston (7), an air cushion is formed by means of which it can be prevented that the piston (7) can strike with its bottom side against the lower region or the bottom of the cylinder (2) and components located there.

2. The plunger mechanism according to claim 1, in which a check valve (16) is arranged in an air channel (8, 10, 12, 14) through which during the movement of the piston (7) toward the upper dead point of the plunger or ram, compressed air is conveyed to the bottom face of the piston (7), wherein said check valves allows the supply of compressed air to the bottom face of the piston (7) and blocks the air channel (8, 10, 12, 14) in the opposite direction.

3. The plunger mechanism according to claim 1 or claim 2, in which the bore (25) connects the interior (3) of the cylinder (2) to an outlet air channel (20) which is formed in the wall (13) of the cylinder (2) and through which compressed air or air can be conveyed to or away from the top side of the piston (7).

## Revendications

1. Mécanisme de plongeur pour une ébauche respectivement une forme finie d'une machine pour le verre, comprenant un plongeur respectivement un niveau, qui est mobile entre ses points morts supérieur et inférieur, au moyen d'un piston (7) alimenté en air comprimé et mobile vers le haut et le bas dans un vérin (2), comprenant un dispositif d'amortissement (25) au moyen duquel le mouvement vers le bas du plongeur respectivement du niveau, peut être ralenti respectivement amorti, avant qu'il n'atteigne son point mort inférieur, et auquel appartient un perçage (25) formé dans une paroi (13) du vérin (2) recevant le piston (7) de manière mobile, à travers lequel l'air évacué lors du mouvement du piston (7) en direction du point mort inférieur du plongeur respectivement du niveau, peut s'échapper de l'espace intérieur (3) du vérin (2), **caractérisé en ce que** le perçage (25) est formé dans la section d'extrémité inférieure du vérin (2) attribuée au point mort inférieur du plongeur respectivement du niveau et peut être fermé par le piston (7) lors du mouvement du plongeur respectivement du niveau dans le point mort inférieur, dans la phase de mouvement immédiatement avant qu'il n'atteigne celui-ci, de façon à ce qu'en dessous de la face inférieure du piston (7), un coussin d'air se forme au moyen duquel on peut éviter que le piston (7) ne vienne buter avec sa face inférieure contre la partie inférieure du cylindre (2) respectivement son fond, et contre les pièces qui y sont présentes.

2. Mécanisme de plongeur selon la revendication 1, dans lequel, dans un canal d'air (8, 10, 12, 14) au travers duquel de l'air comprimé est dirigé vers la face inférieure du piston (7) lors du mouvement du piston (7) en direction du point mort supérieur du plongeur respectivement du niveau, un clapet anti-retour (16) est disposé qui laisse entrer l'air comprimé en direction de la face inférieure du piston (7) et bloque le canal d'air (8, 10, 12, 14) dans la direction opposée.

3. Mécanisme plongeur selon la revendication 1 ou 2, dans lequel le perçage (25) raccorde l'espace intérieur (3) du vérin (2) à un canal d'air évacué (20) qui est formé dans la paroi (13) du cylindre (2), et à travers lequel de l'air comprimé, respectivement de l'air, peut être amené vers, et évacué de, la face supérieure du piston (7).
